(19) Europäisches Patentamt / European Patent Office / Office européen des brevets

(11) EP 1 369 739 B1

(12) **FASCICULE DE BREVET EUROPEEN**

(45) Date de publication et mention de la délivrance du brevet:
**14.02.2007 Bulletin 2007/07**

(51) Int Cl.:
***G02F 1/1337*** *(2006.01)* ***G02F 1/139*** *(2006.01)*

(21) Numéro de dépôt: **03291332.9**

(22) Date de dépôt: **04.06.2003**

(54) **Procédé de réalisation de dispositifs à cristaux liquides nématiques**

Verfahren zur Herstellung von nematischen Flüssigkristallvorrichtungen

Method for producing nematic liquid crystal devices

(84) Etats contractants désignés:
**AT BE BG CH CY CZ DE DK EE ES FI FR GB GR HU IE IT LI LU MC NL PT RO SE SI SK TR**

(30) Priorité: **06.06.2002 FR 0206957**

(43) Date de publication de la demande:
**10.12.2003 Bulletin 2003/50**

(73) Titulaire: **Nemoptic**
**78114 Magny-Les-Hameaux (FR)**

(72) Inventeurs:
- **Lamarque-Forget, Sandrine**
  **78114 Magny les Hameaux (FR)**
- **Jacquier, Sébastien**
  **94110 Arcueil (FR)**
- **Dozov, Ivan N.**
  **91190 Gif sur Yvette (FR)**
- **Faget, Luc**
  **92350 Le Plessis Robinson (FR)**

(74) Mandataire: **Texier, Christian et al**
**Cabinet Régimbeau**
**20, rue de Chazelles**
**75847 Paris cedex 17 (FR)**

(56) Documents cités:

| | |
|---|---|
| **EP-A- 1 174 737** | **WO-A-97/17632** |
| **US-A- 5 166 304** | **US-A- 6 166 168** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 369 739 B1

Printed by Jouve, 75001 PARIS (FR)

## Description

La présente invention concerne le domaine des dispositifs d'affichage à cristaux liquides.

Plus précisément, la présente invention a pour objectif principal de proposer de nouveaux moyens d'ancrage des molécules de cristaux liquides dans des cellules d'affichage.

Les dispositifs d'affichage à cristaux liquides comprennent généralement deux plaques ou substrats de confinement munis d'électrodes sur leur surface interne et un matériau cristal liquide placé entre les deux plaques. Par ailleurs, des moyens sont prévus sur les plaques de confinement pour y assurer et contrôler l'ancrage des molécules de cristaux liquides. Cet ancrage est très important car il détermine l'orientation des molécules dans la cellule et permet son bon fonctionnement.

L'homme de l'art sait en particulier orienter les cristaux liquides nématiques soit perpendiculairement à la surface du substrat (cette orientation est dite homéotrope) soit parallèlement à celle-ci (cette orientation est dite planaire), à l'aide de traitements de surface tels que des dépôts de polymère.

Plus précisément encore, les afficheurs à cristaux liquides «nématiques en hélice» nécessitent un ancrage fort, planaire ou plutôt légèrement oblique. Cet ancrage planaire fort est obtenu habituellement suivant l'art connu par dépôt de polymères orientés ou par évaporation de SiO sous un angle donné.

Une autre famille d'afficheur cristal liquide nématique est apparue depuis peu, la famille des afficheurs nématiques par cassure de surface (par exemple, demande WO 97/17632). Ils permettent la bistabilité donc un affichage qui reste indéfiniment sans consommation d'énergie; seule la commutation entre les deux états nécessite un apport d'énergie. Un autre avantage de la bistabilité est la possibilité de la haute définition car le nombre de lignes n'est fonction que du rapport entre le temps où l'information a besoin d'être changée et le temps d'inscription d'une ligne. Des nombres de lignes supérieurs à 10 000 peuvent aussi être réalisés. La difficulté majeure de réalisation de ce type d'afficheur est liée à la nécessité de casser l'ancrage sur la surface: il faut disposer d'ancrages reproductibles de faible énergie. La présente invention trouve sa principale utilité dans la réalisation de ce type d'afficheurs.

Un exemple typique de ces afficheurs nématiques bistables utilisant des ancrages faibles est réalisé de la façon suivante. Le cristal liquide est placé entre deux lames de verre revêtues d'une couche conductrice d'oxyde d'étain et d'indium. L'une des électrodes porte un revêtement donnant un ancrage oblique ou planaire fort, l'autre électrode porte un revêtement donnant un ancrage monostable planaire d'énergie d'ancrage zénithal faible et azimutal moyen ou fort. Deux polariseurs sont en outre disposés de part et d'autre de la cellule avec une orientation adaptée.

Le principe de cette technologie «bistable» réside dans la présence de deux états stables sans champ électrique appliqué, un état uniforme et un état tordu de 180°. Ces deux états correspondent à des niveaux d'énergie minima. Ils sont équilibrés en utilisant un cristal liquide nématique d'anisotropie diélectrique positive, par exemple le pentyl cyano biphényl (connu sous le nom de 5CB) dopé avec un additif chiral. Ce type de dispositif est généralement appelé Binem.

Cette technologie d'affichage utilise la possibilité de casser l'ancrage planaire faible, tandis que l'ancrage planaire fort reste inchangé, pour passer d'un état à l'autre par application d'un champ électrique de forme et d'intensité spécifique. Ce champ perpendiculaire à la cellule, induit une texture homéotrope proche de l'état «noir» de la technologie TN mais où les molécules, près de la surface de faible énergie d'ancrage, sont perpendiculaires à celle-ci. Cette texture hors équilibre est l'état de transition permettant de commuter vers l'un des deux états stables. A l'arrêt du champ, elle se convertira vers l'un ou l'autre des états stables selon que les effets de couplage élastique ou hydrodynamique ont été favorisés.

Pour faciliter la commutation de la cellule entre l'état tordu et l'état uniforme, l'ancrage planaire faible peut présenter une faible inclinaison (< 1°). L'ancrage fort associé peut être indifféremment planaire ou oblique, comme indiqué dans les brevets de la demanderesse FR 95 13201, FR 96 04447 et US 6 327 017. Dans la cellule, si l'ancrage fort est incliné dans une direction et l'ancrage faible incliné dans la même direction, la cassure d'ancrage transitoire sous champ, cassure dite du premier ordre, permet la commutation de l'état tordu vers l'état uniforme. Cette commutation est beaucoup plus rapide que dans le cas planaire où elle est obtenue par le couplage élastique. La commutation en sens inverse est réalisée comme précédemment par le couplage hydrodynamique, qui reste efficace et facile à contrôler si l'angle d'inclinaison est suffisamment faible.

Différents moyens ont déjà été proposés pour assurer l'ancrage des matériaux cristaux liquides. Ces moyens d'ancrage sont soumis à de nombreuses contraintes.

L'homme de l'art sait notamment que les polymères d'ancrage doivent:

1) être solubles dans un milieu pour être appliqué convenablement sur la plaque ou substrat récepteur afin de mouiller et recouvrir convenablement celui-ci,
2) être aptes à rendre la plaque ou le substrat anisotrope,
3) être insolubles dans le matériau cristal liquide,
4) être aptes à définir un ancrage donnant l'orientation et l'énergie demandées.

Si l'on dispose aujourd'hui de moyens aptes à définir des ancrages forts satisfaisants, l'on ne dispose que de très peu de moyens aptes à assurer un ancrage faible.

La demande de brevet WO02/48782 A1, cité en vertu de l'article 54(3) CBE, décrit une méthode de réalisation de couches d'alignement ayant une faible énergie d'ancrage zénithale.

La présente invention a ainsi pour but de proposer de nouveaux moyens aptes à définir un ancrage uniforme et stable dans le temps, de faible énergie et avec un pretilt faible, $0°<\psi<1°$, avec de préférence $0{,}1°<\psi<0{,}5°$.

Ce but est atteint dans le cadre de la présente invention grâce à un procédé de préparation de cellules à cristaux liquides, tel que défini dans la revendication 1.

Dans un mode avantageux de réalisation de l'invention, l'inclinaison de l'orientation du cristal liquide nématique est faible, $0°<\psi<1°$, de préférence $0{,}1° <\psi< 0{,}5°$.

La présente invention permet de réaliser des couches d'ancrage (d'alignement) de faible énergie dans des cellules de visualisation à cristaux liquides, notamment de cellules à cristaux liquides nématiques bistables.

La présente invention concerne également les dispositifs ainsi obtenus.

On va maintenant expliciter les notions d'ancrage «fort» et d'ancrage «faible».

Les termes «ancrages forts» et «ancrages faibles» peuvent être définis suivant les développements ci-dessous. La source de l'ancrage moléculaire du cristal liquide est l'anisotropie de ses interactions avec la couche d'orientation. On peut caractériser l'ancrage moléculaire par son efficacité et par la direction imposée aux molécules de cristal liquide en l'absence de toute autre influence externe. Cette direction, nommée axe facile, est décrite par le vecteur unité $\vec{n}_o$ o ou par les angles zénithal $\theta_o$et azimutal $\phi_o$ dans le système cartésien de coordonnées ayant l'axe z perpendiculaire à la surface du substrat.

Si l'axe facile des molécules de cristaux liquides est perpendiculaire au substrat, l'alignement est homéotrope. S'il est parallèle au substrat, l'alignement est planaire. Entre ces deux cas, existe l'alignement dit oblique, décrit par l'angle zénithal d'ancrage défini par rapport à la normale à la surface du substrat, ou par son complément nommé angle d'inclinaison (ou "pretilt").

On introduit une densité superficielle d'énergie $\gamma$ pour caractériser la force d'interaction du cristal liquide avec le substrat. Elle dépend de l'orientation $\vec{n}_s$ s des molécules de cristal liquide sur la surface (décrite aussi par les angles zénithal $\theta_S$ et azimutal $\varphi_S$)

$$\gamma(\theta_s,\varphi_s)=\gamma(\theta_o,\varphi_o)+g(\theta_s-\theta_o,\varphi_s-\varphi_o)$$

où g représente l'énergie d'ancrage. Elle caractérise la partie anisotrope de l'interaction et devient nulle (par convention) quand l'orientation moléculaire du cristal liquide coïncide avec la direction de l'axe facile.

Dans la plupart des expériences, la variation de l'un des deux angles (zénithal ou azimutal) est prépondérante. C'est pourquoi les deux composantes de l'énergie d'ancrage sont souvent étudiées séparément. La forme la plus connue de l'énergie d'ancrage est celle proposée par Rapini et Papoular (*J. Phys. Coll.* (1969) **30**, C-4-54):

$$g\ (\theta_s,\varphi_s)=\frac{w_z}{2}\sin^2(\theta_s)+\frac{w_a}{2}\sin^2(\varphi_s)$$

ou dans le cas général (H. Dreyfus-Lambez *et al.*, *Mol. Cryst. and Liq. Cryst.* (2000), **352**, 19-26):

$$g\ (\theta_s,\varphi_s)=\frac{w_z}{2}\sin^2(\theta_s-\theta_0)+\frac{w_a}{2}\sin^2(\varphi_s-\varphi_0)$$

Les coefficients positifs $w_z$ et $w_a$ sont usuellement nommés respectivement énergie d'ancrage zénithale et azimutale. Ils ont la dimension d'une densité superficielle d'énergie.

L'énergie d'ancrage peut également être donnée par la longueur d'extrapolation. Il s'agit de la distance entre la surface étudiée et la position d'une surface virtuelle. En imposant un ancrage infiniment fort (il est impossible de faire pivoter les molécules situées sur cette surface virtuelle), elle induit la texture réelle du cristal liquide. La longueur

d'extrapolation zénithale $L_z$ est proportionnelle à l'inverse de l'énergie d'ancrage $w_z$ selon la relation $L_z$ = $L_z = \frac{k_{11}}{w_z}$ où $k_{11}$ est le Wz coefficient d'élasticité de déformation en éventail du cristal liquide considéré. De même on définit la longueur d'extrapolation azimutale $L_a$ = $L_a = \frac{k_{22}}{w_a}$ ,$k_{22}$ étant le coefficient d'élasticité de déformation de torsion du cristal liquide considéré. D'habitude, on dit que l'ancrage est fort, quand, pendant le fonctionnement de la cellule, les molécules sur la surface restent pratiquement parallèles à l'axe facile. Par contre, l'ancrage est faible si une déviation appréciable apparaît pendant le fonctionnement.

L'énergie d'ancrage zénithale peut être évaluée par une méthode simple décrite ci-dessous: la mesure du champ critique de cassure de l'ancrage.

On sait que dans une cellule cristal liquide, l'on peut «casser» un ancrage strictement planaire ($\psi$=0) en utilisant un champ électrique E > $E_c$ normal aux plaques, appliqué sur un cristal liquide nématique d'anisotropie diélectrique positive $\varepsilon_a=\varepsilon_{//}-\varepsilon_{\perp}>0$. Pour E croissant et s'approchant de $E_c$, l'angle des molécules en surface $\theta_s$ passe rapidement de 90° à 0 ; ceci correspond à une variation détectable de la biréfringence de la cellule. Au dessus de $E_c$, l'angle $\theta_s$ reste nul, la surface est dite 'cassée'.

Le champ critique $E_c$ pour casser l'ancrage zénithal est défini par la condition (I. Dozov et al et *Phys. Rev. E 58* (1998), 6, 7442-7446):

$$E_c = \frac{1}{L_z}\sqrt{\frac{K}{\varepsilon_o \varepsilon_a}}$$

K est la constante élastique de courbure (~10 pN) et *Lz* est la longueur d'extrapolation définissant l'énergie d'ancrage zénithale qui s'écrit

$$W_z = (1/2)\,(K/L_z)\cos^2\theta_s$$

( $\theta_s$ angle des molécules en surface).

Pour des ancrages zénithaux, on considère que l'ancrage est fort, si $L_z$< 20 nm ($E_c$ >20 V/$\mu$m) et faible si $L_z$> 50 nm ($E_c$ < 10 V/$\mu$m). Les ancrages azimutaux sont un ordre de grandeur plus faibles. On considère que l'ancrage azimutal est fort, si $L_a$< 100 nm.

Dans le cadre de la présente invention, l'ancrage zénithal de faible énergie est obtenu par dépôt de copolymères et terpolymères spécialement choisis à base de poly(chlorure de vinyle-co-alkyl éther de vinyle) ou de poly(chlorure de vinyle-co-aryl éther de vinyle) subissant une suite de traitements spécifiques (ces copolymères et terpolymères ainsi que leurs traitements spécifiques sont précisés ci-dessous).

Le dépôt de la couche d'ancrage à base de copolymères et terpolymères à base de poly(chlorure de vinyle-co-alkyl éther de vinyle) ou de poly(chlorure de vinyle-co-aryl éther de vinyle) se fait à partir d'une solution de polymère par centrifugation ou par d'autres méthodes telles que la flexographie (Flex-printing). Après évaporation du solvant on obtient une couche de polymère d'épaisseur typiquement (mais non limitativement) comprise entre un nanomètre et 100 nm.

Ensuite, un frottement par un rouleau textile de l'art connu, est de préférence appliqué sur la couche de polymère pour lui imposer une orientation azimutale qui induira l'ancrage azimutal du cristal liquide, de plus un faible pretilt est induit par le brossage.

Pour réaliser une cellule bistable par cassure d'ancrage, la surface d'ancrage (dit faible) doit présenter un ancrage planaire ou oblique avec faible pretilt d'énergie d'ancrage zénithal relativement faible (par exemple $L_z \geq 40$ nm) et un ancrage azimutal relativement fort ($L_a$ << d, épaisseur de la cellule). Le pretilt de l'alignement du nématique doit être compris entre 0° et 1°, les valeurs optimales étant comprises entre 0,1°et 0,5°.

Les polymères et les copolymères objet de l'invention, sont les copolymères ou terpolymères dérivés du chlorure de vinyle et des éthers de vinyle de formules I:

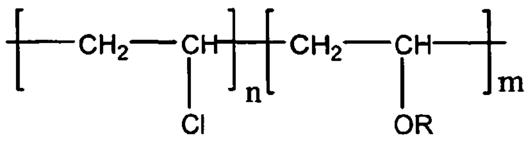

I

dans lequel R représente un radical alkyl ou aryl substitué ou non, n et m peuvent varier de 0 à 1,avec de préférence des valeurs comprises pour n: 0,5 <n<0,8 et pour m: 0,2<m <0,5.

Selon une application de l'invention les copolymères sont constitués du chlorure de vinyle et de l'éther isobutylique de vinyle de formule II:

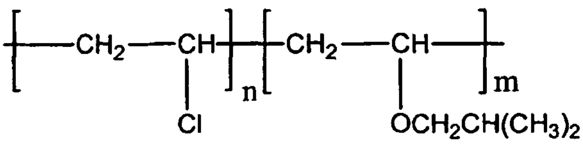

II

Des terpolymères dérivés du PVC, et de deux autres co-monomères permettent également d'obtenir des couches d'ancrage faible énergie et constituent une autre variante de l'invention. A titre d'exemple les co-monomères peuvent être d'autres dérivés éther ou ester de l'alcool vinylique.

Dans un variante de l'invention, le polymère est un terpolymère à base de poly(chlorure de vinyle) - poly(-isobutyléther de vinyle) et un autre comonomère dérivé de l'alcool vinylique.

Les polymères et copolymères sont déposés sur le substrat par centrifugation d'une solution. D'autres moyens de dépôts tels que la flexographie peuvent être également utilisés. Les solvants appropriés sont par exemple des cétones telles que la méthyléthylcétone ou d'autres solvants tels que la diméthylformamide, la N-methyl pyrrolidone ou le butoxy éthanol ou des mélanges de ces solvants.

Après recuit à une température inférieure à la température de fusion Tf, de préférence entre 130°C et 180°C, pendant une durée comprise entre quelques minutes et quelques heures, la couche de polymère est insolée par rayonnement UV de longueur d'onde comprise entre 180 et 380 nm, et éventuellement recuite à une température de 130°C à 180°C. La couche de polymère est ensuite frottée avec un rouleau pour induire l'orientation azimutale.

Les couches sont en général réalisées sur un substrat d'ITO (oxyde mixte d'indium et d'étain) classique, mais d'autres électrodes peuvent être envisagées.

Dans une variante de l'invention, l'orientation azimutale de la couche d'ancrage peut être obtenue par d'autres procédés qu'un frottement avec un rouleau, par exemple en utilisant un substrat préalablement traité:

- par une évaporation oblique de SiO,
- par un polymère brossé par un rouleau ou étiré,
- par un réseau gravé dans le substrat, imprimé ou photoinduit.

Le procédé conforme à la présente invention permet l'obtention d'une couche d'alignement d'ancrage zénithal faible, d'ancrage azimutal fort et d'un pretilt contrôlé compris entre 0° et 1°. Les énergies d'ancrage zénithal et azimutal ainsi que le pretilt peuvent être modifiés d'une façon contrôlée par les traitements thermiques, UV ou de brossage précédemment décrits.

Deux exemples de réalisation selon l'invention sont décrits ci-dessous.

Un premier exemple a permis de monter une cellule cristal liquide d'épaisseur 1,5 microns entre deux plaques de verre recouvertes d'ITO. L'une a reçu une évaporation de SiO (d'épaisseur: 107 nm) pour donner un ancrage fort incliné. L'autre électrode a été recouverte de copolymère selon l'invention d'épaisseur inférieure à 20 nm et traité selon le procédé de l'invention:

Étape 1: dépôt par centrifugation du polymère à partir d'une solution à 0,75% en masse dans un mélange 50/50 de N-méthylpyrrolidone/butoxy éthanol,

Étape 2: recuit à 150°C pendant 1h30,

Étape 3: insolation ($\lambda$ =254 nm ) pendant 2 heures avec une lampe à vapeur de mercure de 100 Watts.

Étape 4: recuit à 150°C pendant 30 minutes.

Étape 5: brossage, pour induire l'ancrage azimutal, avec un rouleau recouvert de velours textile.

Les deux lames décrites sont assemblées pour réaliser une cellule du type Binem. La cellule est remplie de cristal liquide dopé, mélange adapté à la technologie de type Binem (pas chiral: 5,6 microns). La cellule fonctionne avec des impulsions de 10 Volts à température ambiante et présente un contraste de 50.

Dans un deuxième exemple, le cristal liquide utilisé est un autre mélange adapté à la technologie de type Binem avec une plage de fonctionnement de 0°C à plus de 50°C pour des impulsions de commande variant respectivement de 35 à 2 Volts.

Les ancrages planaires faibles préparés selon l'invention ont les caractéristiques suivantes:

- les couches d'alignement sont stables chimiquement et mécaniquement dans le temps, au contact des mélanges de cristaux liquides utilisés,
- l'ancrage présente un faible pretilt, typiquement de l'ordre de 0,3°,
- la longueur d'extrapolation de l'ancrage zénithal, mesurée par une technique de champ fort, pour le 5 CB à température de 22°C, est proche de $L_z$ =80nm .

Plusieurs mélanges nématiques commerciaux ont été testés et la longueur d'extrapolation varie de 40 à 80 nm en fonction du nématique à température ambiante. Ces valeurs correspondent à des énergies d'ancrage zénithal beaucoup plus faibles que celles obtenues avec les polymères classiques utilisés dans les afficheurs nématiques en hélice.

La force de l'ancrage azimutal obtenu dépend du traitement réalisé sur les couches. Par brossage, on obtient par exemple des longueurs d'extrapolation azimutales pouvant varier entre 50 et 200 nm. Ces valeurs sont compatibles avec le fonctionnement des cellules de type Binem.

Le procédé selon la présente invention présente notamment les avantages suivants:

- il évite la réalisation d'ancrage faible énergie sous vide avec une couche d'oxyde de silicium SiO. Le processus de dépôt sous vide est long et coûteux, de plus il est difficile à contrôler;
- l'utilisation d'une couche polymère selon la présente invention offre les avantages notables de simplicité et de coût de fabrication plus faible;
- le petit pretilt, stable en température et en durée, optimise la commutation et permet un fonctionnement de type Binem avec des impulsions de commande plus courtes.

Bien entendu, la présente invention n'est pas limitée aux modes de réalisation particuliers qui viennent d'être décrits, mais s'étend à toutes variantes conformes à son esprit.

**Revendications**

1. Procédé de réalisation de dispositifs à cristaux liquides nématiques, ayant une faible energie d'ancrage zénithale du cristal liquide sur au moins une de ses plaques de confinement, la faible énergie d'ancrage zénithale correspondant à une valeur de la longueur d'extrapolation définissant l'énergie d'ancrage zénithale, $L_z$, supérieure à 50 nm, le procédé comprenant la fabrication d'une couche d'alignement comportant les étapes suivantes:

■ déposer, sur un substrat, un polymère, le polymère étant un copolymère ou un terpolymère dérivé du chlorure de vinyle et des éthers de vinyle de / formule 1

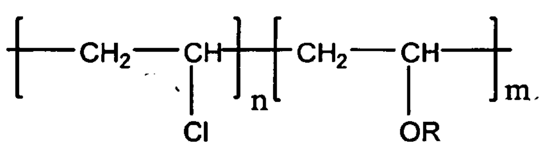

I

dans lequel R représente un radical alkyl ou aryl substitué ou non, n et m peuvent varier de 0 à 1, avec de préférence des valeurs comprises pour n: 0,5 <n<0,8 et pour m: 0,2<m <0,5,

■ stabiliser thermiquement et / ou sous insolation ultra-violette ce dépôt polymère, et

■ définir une orientation azimutale du dépôt induisant un ancrage azimutal contrôlé du cristal liquide.

2. Procédé selon la revendication 1, tel que les copolymères sont constitués de chlorure de vinyle et de l'éther isobutylique de vinyle de formule II:

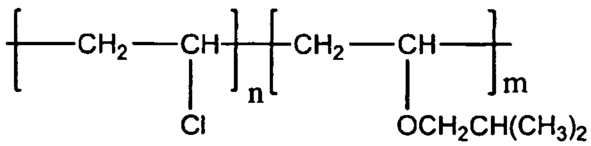

II

3. Procédé selon l'une quelconque des revendications 1 à 2, tel que le polymère est un copolymère de poly(chlorure de vinyle co-isobutyléther de vinyle).

4. Procédé selon la revendication 1, tel que le polymère est un terpolymère à base de poly(chlorure de vinyle) - poly (-isobutyléther de vinyle) et d'un autre comonomère dérivé de l'alcool vinylique.

5. Procédé selon l'une quelconque des revendications 1 à 4, où la stabilisation met en oeuvre une insolation sous la lumière ultra-violette.

6. Procédé selon l'une quelconque des revendications 1 à 4, où un ou plusieurs recuits induisent la stabilisation.

7. Procédé selon l'une quelconque des revendications 1 à 6, où la stabilisation utilise un ou plusieurs recuits effectués avant et/ou après insolation.

8. Procédé selon l'une quelconque des revendications 1 à 7, tel que l'étape ou les étapes de stabilisation thermique sont opérées à des températures inférieures à la température de fusion (Tf) du polymère.

9. Procédé selon l'une quelconque des revendications 1 à 8, tel que l'étape d'insolation est opérée à l'aide de lumière ultraviolette de longueur d'onde comprise entre 180 et 380 nm.

10. Procédé selon l'une quelconque des revendications 1 à 9, tel que l'étape consistant à définir une orientation azimutale contrôlée du cristal liquide est assurée par le fait que le polymère est frotté avec un rouleau recouvert de textile.

11. Procédé selon l'une quelconque des revendications 1 à 10, tel que l'étape consistant à définir une orientation azimutale contrôlée du cristal liquide est assurée par le dépôt du polymère sur un substrat rendu déjà anisotrope par un traitement particulier tel que: un autre polymère brossé ou étiré, SiO ou un autre oxyde évaporé, un réseau gravé, imprimé ou photoinduit.

12. Procédé selon la revendication 11, tel que l'ancrage azimutal est fort, correspondant à une longueur d'extrapolation, $L_a$, inférieure à 100nm.

13. Procédé selon l'une quelconque des revendications 1 à 12, tel que toutes les étapes de traitement sont choisies pour définir un pretilt contrôlé et stable de l'orientation du nématique, de valeurs comprises entre 0 et 1°, de préférence entre 0,1° et 0,5°.

14. Procédé selon l'une quelconque des revendications 1 à 13, tel que le polymère est déposé sur le substrat par centrifugation.

15. Procédé selon l'une quelconque des revendications 1 à 13, tel que le polymère est déposé sur le substrat par flexographie.

16. Procédé selon l'une quelconque des revendications 1 à 15, tel que le polymère est déposé en solution dans un solvant à base de cétone telle que la méthyléthylcétone , de diméthylformamide, de N-méthyl pyrrolidone ou du butoxy éthanol ou de leurs mélanges.

**17.** Dispositif à cristaux liquides nématiques bistables, utilisant au moins une couche d'alignement ayant une faible énergie d'ancrage zénithale réalisée par un procédé selon l'une quelconque des revendications 1 à 16.

**18.** Dispositif selon la revendication 17, tel que la couche ayant une faible énergie d'ancrage zénithale est déposée sur une électrode transparente ou réfléchissante.

## Claims

**1.** Method of producing nematic liquid-crystal devices, having a low zenithal anchoring energy of the liquid crystal on at least one of its confinement plates, the low zenithal anchoring energy corresponding to a value of the extrapolation length $L_z$ defining the zenithal anchoring energy of greater than 50 nm, the method comprising the production of an alignment layer having the following steps:

- a polymer is deposited on a substrate, the polymer being a copolymer or a terpolymer derived from vinyl chloride and vinyl ethers of formula I:

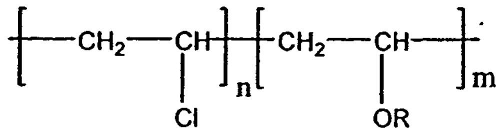

I

in which R represents a substituted or unsubstituted alkyl or aryl radical; n and m may vary from 0 to 1, preferably with values of n such that $0.5 < n < 0.8$ and of m such that $0.2 < m < 0.5$;

- this polymer coating is stabilized, thermally and/or by ultraviolet irradiation; and
- an azimuthal orientation of the coating for inducing a controlled azimuthal anchoring of the liquid crystal is defined.

**2.** Method according to Claim 1, such that the copolymers consist of vinyl chloride and vinyl isobutyl ether of formula II:

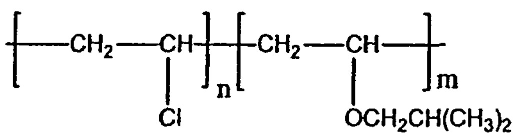

II

**3.** Method according to either of Claims 1 and 2, such that the polymer is a poly(vinyl chloride-co-vinyl isobutyl ether) copolymer.

**4.** Method according to Claim 1, such that the polymer is a terpolymer based on poly(vinyl chloride)/poly(vinyl isobutyl ether) and on another comonomer derived from vinyl alcohol.

**5.** Method according to any one of Claims 1 to 4, where the stabilization involves exposure to ultraviolet light.

**6.** Method according to any one of Claims 1 to 4, where one or more annealing operations induce the stabilization.

**7.** Method according to any one of Claims 1 to 6, where the stabilization uses one or more annealing operations carried out before and/or after exposure.

**8.** Method according to any one of Claims 1 to 7, such that the thermal stabilization step or steps are carried out at temperatures below the melting point ($T_m$) of the polymer.

**9.** Method according to any one of Claims 1 to 8, such that the exposure step is carried out using ultraviolet light having a wavelength of between 180 and 380 nm.

**10.** Method according to any one of Claims 1 to 9, such that the step consisting in defining a controlled azimuthal orientation of the liquid crystal is ensured by the fact that the polymer is rubbed with a textile-covered roller.

**11.** Method according to any one of Claims 1 to 10, such that the step consisting in defining a controlled azimuthal orientation of the liquid crystal is ensured by depositing the polymer on a substrate already made anisotropic by a particular treatment such as: another polymer, brushed or stretched; $SiO_2$ or another oxide that is evaporated; an etched, printed or photoinduced grating.

**12.** Method according to Claim 11, such that the azimuthal anchoring is strong, corresponding to an extrapolation length $L_a$ of less than 100 nm.

**13.** Method according to any one of Claims 1 to 12, such that all the treatment steps are chosen in order to define a controlled and stable pretilt of the orientation of the nematic, with values between 0° and 1°, preferably between 0.1° and 0.5°.

**14.** Method according to any one of Claims 1 to 13, such that the polymer is deposited on the substrate by spin coating.

**15.** Method according to any one of Claims 1 to 13, such that the polymer is deposited on the substrate by flex printing.

**16.** Method according to any one of Claims 1 to 15, such that the polymer is deposited in solution in a solvent based on a ketone, such as methyl ethyl ketone, dimethylformamide, N-methylpyrrolidone or butoxyethanol or mixtures thereof.

**17.** Bistable nematic liquid-crystal device using at least one alignment layer having a low zenithal anchoring energy that is produced by a method according to any one of Claims 1 to 16.

**18.** Device according to Claim 17, such that the alignment layer having a low zenithal anchoring energy is deposited on a transparent or reflective electrode.

## Patentansprüche

**1.** Verfahren zur Herstellung von Vorrichtungen mit nematischen Flüssigkristallen, die auf mindestens einer ihrer Begrenzungsplatten eine geringe zenitale Verankerungsenergie des Flüssigkristalls aufweisen, wobei die geringe zenitale Verankerungsenergie einem Wert der Extrapolationslänge $L_z$, welche die Verankerungsenerige definiert, von über 50 nm entspricht, wobei das Verfahren die Herstellung einer Ausrichtungsschicht umfasst, welches die folgenden Schritte umfasst:

- Abscheiden eines Polymers, bei dem es sich um ein Copolymer oder um ein Terpolymer handelt, das von Vinylchlorid und Vinylethern der Formel I

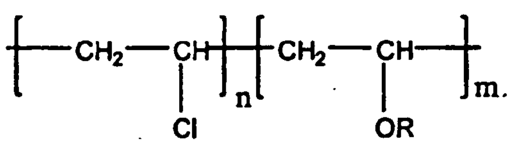

I

abgeleitet ist, in welcher R einen substituierten oder unsubstituierten Alkyl- oder Arylrest darstellt, n und m von 0 bis 1 variieren können, vorzugsweise mit Werten für n:0,5<n<0,8 und für m: 0,2<m<0,5 einschließlich, auf einem Substrat,
- Stabilisieren dieser Polymerabscheidung auf thermische Weise und/oder unter Einstrahlung von Ultraviolett und

• Definieren einer azimutalen Orientierung der Abscheidung, was eine kontrollierte azimutale Verankerung des Flüssigkristalls induziert.

**2.** Verfahren nach Anspruch 1, derart, dass die Copolymere aus Vinylchlorid und Isobutylvinylether der Formel II:

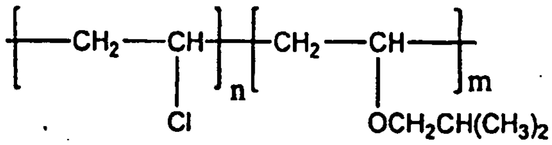

II

bestehen.

**3.** Verfahren nach irgendeinem der Ansprüche 1 bis 2, derart, dass das Polymer ein Copolymer von Poly(vinylchlorid-co-isobutylvinylether) ist.

**4.** Verfahren nach Anspruch 1, derart, dass das Polymer ein Terpolymer auf der Basis von Poly(vinylchlorid) - Poly (isobutylvinylether) und eines anderen, von Vinylalkohol abgeleiteten Comonomers ist.

**5.** Verfahren nach irgendeinem der Ansprüche 1 bis 4, in dem die Stabilisierung eine Bestrahlung mit Ultraviolettlicht verwendet.

**6.** Verfahren nach irgendeinem der Ansprüche 1 bis 4, in dem ein oder mehrere Tempervorgänge die Stabilisierung induzieren.

**7.** Verfahren nach irgendeinem der Ansprüche 1 bis 6, in dem die Stabilisierung einen oder mehrere Temperschritte verwendet, die vor und/oder nach Bestrahlung vorgenommen werden.

**8.** Verfahren nach irgendeinem der Ansprüche 1 bis 7, derart, dass der Schritt oder die Schritte der thermischen Stabilisierung bei Temperaturen unterhalb des Schmelzpunkts (F.p.) des Polymers vorgenommen werden.

**9.** Verfahren nach irgendeinem der Ansprüche 1 bis 8, derart, dass der Bestrahlungsschritt mit Hilfe von Ultraviolettlicht mit einer Wellenlänge zwischen 180 und 380 nm einschließlich vorgenommen wird.

**10.** Verfahren nach irgendeinem der Ansprüche 1 bis 9, derart, dass der Schritt, der darin besteht, eine kontrollierte azimutale Orientierung des Flüssigkristalls zu definieren, durch die Tatsache sichergestellt wird, dass das Polymer mit einer Textil-bedeckten Walze gerieben wird.

**11.** Verfahren nach irgendeinem der Ansprüche 1 bis 10, derart, dass der Schritt, der darin besteht, eine kontrollierte azimutale Orientierung des Flüssigkristalls zu definieren, durch die Abscheidung des Polymers auf einem Substrat sichergestellt wird, das bereits durch eine spezielle Behandlung anisotrop gemacht worden ist, wie: ein weiteres gebürstetes oder gerecktes Polymer, aufgedampftes SiO oder ein anderes aufgedampftes Oxid, ein Harz, das graviert, aufgedruckt oder photoinduziert ist.

**12.** Verfahren nach Anspruch 11, derart, dass die azimutale Verankerung stark ist, entsprechend einer Extrapolationslänge $L_a$ unter 100 nm.

**13.** Verfahren nach irgendeinem der Ansprüche 1 bis 12, derart, dass alle Behandlungsschritte so ausgewählt sind, dass eine kontrollierte und stabile Vorneigung der nematischen Orientierung von Werten zwischen 0 und 1°, vorzugsweise zwischen 0,1° und 0,5°, definiert wird.

**14.** Verfahren nach irgendeinem der Ansprüche 1 bis 13, derart, dass das Polymer durch Zentrifugation auf dem Substrat abgeschieden wird.

**15.** Verfahren nach irgendeinem der Ansprüche 1 bis 13, derart, dass das Polymer durch Flexodruck auf dem Substrat

abgeschieden wird.

**16.** Verfahren nach irgendeinem der Ansprüche 1 bis 15, derart, dass das Polymer in Lösung in einem Lösungsmittel auf Keton-Basis, wie Methylethylketon, Dimethylformamid, N-Methylpyrrolidon oder Butoxyethanol oder deren Mischungen, abgeschieden wird.

**17.** Vorrichtung mit bistabilen nematischen Flüssigkristallen, die mindestens eine Ausrichungsschicht verwendet, welche eine geringe zenitale Verankerungsenergie aufweist, die durch ein Verfahren nach irgendeinem der Ansprüche 1 bis 16 verwirklicht wird.

**18.** Vorrichtung nach Anspruch 17, derart, dass die Schicht, die eine geringe zenitale Verankerungsenergie aufweist, auf einer transparenten oder reflektierenden Elektrode abgeschieden ist.